Europäisches Patentamt

European Patent Office

Office européen des brevets

(11) Veröffentlichungsnummer: **0 503 253 A1**

# (12) EUROPÄISCHE PATENTANMELDUNG

(21) Anmeldenummer: **92101321.5**

(51) Int. Cl.5: **B29C 39/08**

(22) Anmeldetag: **28.01.92**

(30) Priorität: **12.03.91 DE 4107858**

(43) Veröffentlichungstag der Anmeldung:
**16.09.92 Patentblatt 92/38**

(84) Benannte Vertragsstaaten:
**AT BE DE ES FR GB IT LU NL SE**

(71) Anmelder: **RHEIN-BONAR
KUNSTSTOFF-TECHNIK GmbH
4. Industriestrasse 18
W-6832 Hockenheim(DE)**

(72) Erfinder: **Kunisch, Gerhard
Ostpreussenring 12
W-6830 Schwetzingen(DE)**
Erfinder: **Auer, Werner
Hofstr. 6
W-6835 Brühl(DE)**

(74) Vertreter: **Ratzel, Gerhard, Dr.
Seckenheimer Strasse 36a
W-6800 Mannheim 1(DE)**

(54) **Rotierter, geschlossener Kunststoffbehälter mit Schwall- und/oder Trennwänden.**

(57) Die Erfindung betrifft einen rotierten, geschlossenen Kunststoffbehälter mit Schwall- und/oder Trennwänden, wobei mindestens eine, vor Verschließen und Rotationsbeginn der Herstellungsform (1), in diese eingesetzte und während der Rotation an den Übergangsstellen (5) mit der Behälterwand (6) zumindest in einem Teilbereich eine homogene Verbindung eingehende Einlage (4) die Schwall- und/oder Trennwand bildet.

Fig.1

Die Erfindung betrifft einen rotierten, geschlossenen Kunststoffbehälter mit Schwall- und/oder Trennwänden.

Geschlossene Behälter wie Kraftstoff- oder Wassertanks werden durch das Blas- oder durch das Rotationsverfahren hergestellt. Ferner sind Herstellungsverfahren bekannt, bei denen die Tanks aus mehreren Teilen zusammengesetzt und verschweißt werden. Letztere bringen jedoch Dichtigkeitsprobleme mit sich.

Beim Rotationsverfahren wird der Behälter einstückig hergestellt und ist somit mechanisch fest und flüssigkeitsdicht.

Insbesondere bei Kraftstoffbehältern für Kraftfahrzeuge entstehen beim Bremsen und Anfahren hohe Kräfte durch den schwallenden und wellenschlagenden Kraftstoff, was oft zur Zerstörung oder Beschädigung des Behälters bzw. der eingebauten Elemente, z. B. des Hebelgebers etc. führen kann.

Der Erfindung liegt daher die Aufgabe zugrunde, in einen durch Rotation hergestellten Behälter eine oder mehrere Schwallwände einzubringen, die während des Fertigungsverfahrens gebildet bzw. eine homogene Verbindung mit dem Behälter eingehen, so daß ein nachträgliches Einbauen, was das Auftrennen eines rotierten Behälters zur Folge hätte, vermieden werden kann.

Dies wird erfindungsgemäß durch einen rotierten, geschlossenen Kunststoffbehälter gemäß des vorgeschlagenen Anspruchs 1 gelöst, dessen besondere Ausführungsmerkmale in den Unteransprüchen gekennzeichnet sind.

Hierbei ist vorgesehen, daß der erfindungsgemäße rotierte, geschlossene Kunststoffbehälter mit Schwall- und/oder Trennwänden, derart ausgebildet wird, daß mindestens eine, vor Verschließen und Rotationsbeginn der Herstellungsform in diese eingesetzt und während der Rotation an den Übergangsstellen mit der Behälterwand zumindest in einen Teilbereich,eine homogene Verbindung eingehende Einlage, die Schwall- und/oder Trennwand bildet. Alternativ besteht hierbei die Möglichkeit, die Einlage in die Herstellungsform lose einzulegen, diese Einlage in die Herstellungsform einzupressen oder einzukeilen oder in entsprechende Formteile einzuschieben oder einzustecken. Auch ist eine Fixierung mittels Halteelementen, wie z. B. Schraubenstifte oder Splinde in Betracht zu ziehen, wobei entweder die Einlage selbst oder ein in der Einlage eingebettetes Element zum Spannen herangezogen wird. Bei der Lösungsmöglichkeit, die Einlage einfach in die Herstellungsform einzuschieben oder einzustecken, weißt die Herstellungsform zumindest teilweise eine, die Einlage aufnehmende Fuge auf oder eine Feder bzw. Wulst, der von der Einlage zumindest teilweise umgriffen wird.

Bei der Lösungsmöglichkeit der Einlagenfixierung durch entsprechende Fixier- oder Verschraubungsmittel ist vorgesehen, daß der erfindungsgemäße rotierte, geschlossene Kunststoffbehälter mit Schwall- und/oder Trennwänden, derart ausgebildet wird, daß zumindest eine, vor Verschließen und Rotationsbeginn der Herstellungsform in diese eingesetzte und die Wandung der Form mittels Fixierelementen durchragende und verschraub- oder befestigbare, während der Rotation teilweise mit dem Behältermaterial ummantelte und an den Übergangsstellen zur Behälterwand eine homogene Verbindung eingehende Einlage die Schwall- und/oder Trennwand bildet.

Hierbei kann die Einlage als Tafel, Band, Geflecht, Lochblech oder Folie ausgebildet sein und gegebenenfalls als Verstärkungseinsätze ein Geflecht, Draht oder Blechplatte aufweisen. Es ist auch möglich, die Einlage nur aus einer Blechplatte zu schaffen. Zumindest an den Übergangsstellen, zwischen die Schwall- und/oder Trennwand bildende Einlage und der Übergangsstelle zur Behälterwand ist diese Einlage aus dem Behälterwerkstoff beschaffen oder derartig ummantelt, so daß hier eine homogene Verbindung während des Rotationsverfahrens eingegangen werden kann. Bevorzugterweise ist die Einlage im Bereich der Übergangsstellen partiell verdickt oder verstärkt. Die Fixierelemente können als Gewindestifte, eingegossene Muttern, Klammern oder Spangen ausgebildet sein, die entweder als sogenannte verlorene Fixierelemente im Behälter bzw. der Schwallwand eingebettet bleiben oder nach dem Herstellungsverfahren entnommen bzw. herausgezogen werden können. Eventuell auftretende Bohrungen oder Durchgangsbereiche, die durch die Entnahme der Fixierelemente entstehen, können mit entsprechend vorbereiteten Propfen verschlossen werden. Bevorzugterweise werden die Fixierelemente derart angeordnet bzw. eingebettet, daß keine künstliche Leckagestellen entstehen.

Die Fixierelemente können als Spannelemente ausgebildet sein. Bevorzugterweise sind diese als durchgehende, die Form durchragende Spannelemente bzw. Halteelemente ausgebildet und beispielsweise jeweils partiell im Bereich der Formwandung angeordnet.

Anhand den beigefügten Zeichnungen, die besonders bevorzugte Ausführungsbeispiele der Erfindung zeigen, wird diese nun näher beschrieben.

Dabei zeigen:

Figur 1

den einfachsten Aufbau des erfindungsgemäßen Kunststoffbehälters in einer nahezu schematisierten Darstellung als fertig rotiertes Produkt innerhalb der Form.

Figur 2 und 3

die wesentlichen Entstehungsstationen des erfindungsgemäßen Behälters.

Figur 4

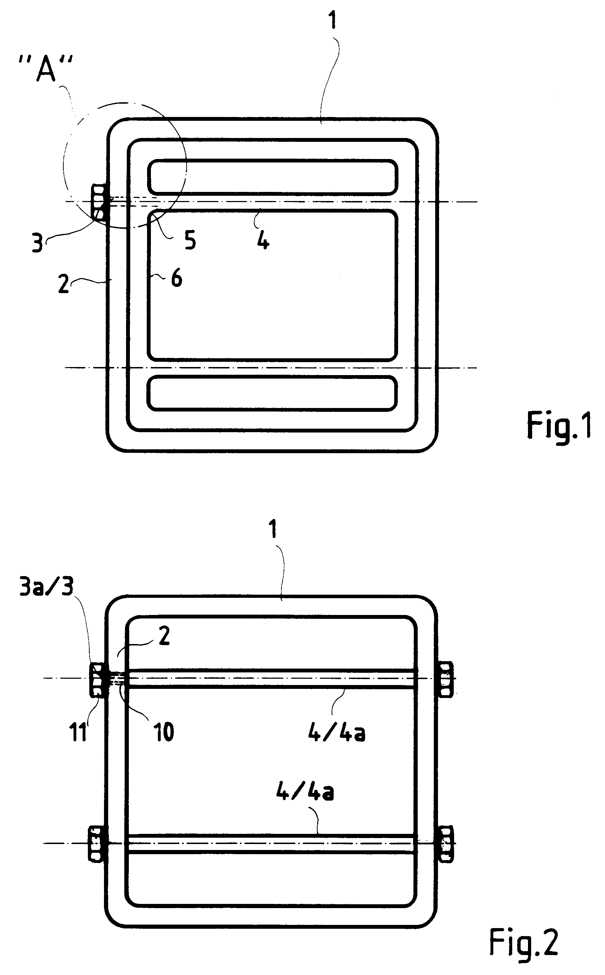

das in Figur 1 mit A gekennzeichnete Detail.

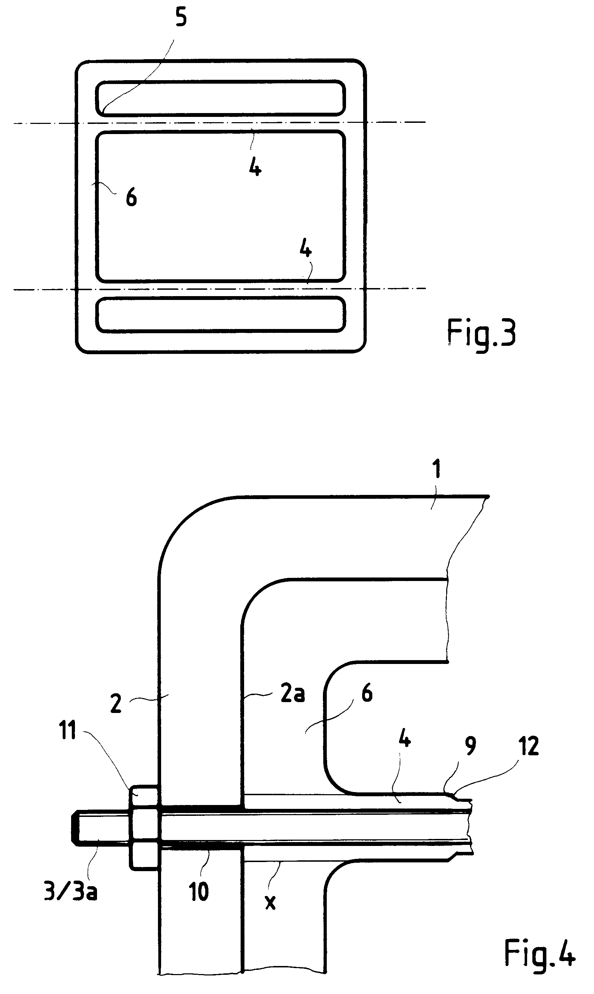

Figur 5
eine alternative zu Figur 4.
Figuren 6 bis 13
verschiene Ausführungsformen des erfindungsgemäßen Kunststoffbehälters.
Figur 14 bis 16
verschiedene Ausführungsvarianten der Einlagenanordnung innerhalb der Rotationsform

Figur 1 zeigt eine schematische Darstellung des erfindungsgemäßen Kunststoffbehälters innerhalb der Form 1. Deutlich erkennbar sind die, die Schwall- und/oder Trennwand bildenden Einlagen 4, die praktisch mit der Behälterwand 6 einstückig ausgebildet sind. Die vorgehensweise zur Herstellung eines solchen erfindungsgemäßen Behälters wird am Besten an den nachfolgenden Figuren 2 und 3 geschildert.

Zunächst wird in die leere Form 1 die Einlage 4, beispielsweise in Form einer Tafel 4a eingesetzt, welche stirnseitig entsprechende Fixierelemente 3 ausweist. Die Fixierelemente 3 werden durch Öffnungen 10 in der Formwand 2 hindurchgeführt und beispiels-weise, wenn es sich bei den Fixierelementen 3 um Gewindestifte 3a handelt, mit Muttern 11 angezogen. Es wird nun die Herstellungsform 1 geschlossen und das Behältermaterial in Form von Granulat oder Pulver in die Form gegeben und durch das sogenannte Rotationsverfahren der Behälter gewonnen. Die vorbereitete Form 1 mit eingesetzter Einlage 4 ist in Figur 2 dargestellt, während die Figur 3 das angefertigte Produkt darstellt.

Die Figur 4 zeigt ein in Figur 1 mit A gekennzeichnetes Detail. Es ist hierbei erkennbar, daß in die Einlage 4 stirnseitig Gewindestifte 3a eingebettet sind, die durch die Formwandung 2 hindurchragen und von außen mittels Muttern 11 angezogen werden, so daß die Einlage 4 dicht an die Wandungsinnenseite 2a angepreßt wird. Es ist hierbei wichtig, den Bereich der Übergangstellen zwischen Einlage 4 und Behälterwand 6 aus gleichem Material oder zumindest aus einem solchen Material zu schaffen, die eine homogene Verbindung miteinander eingehen. Aus Gründen der Wärmeeinwirkung ist es von Vorteil, diesen Bereich mit einer Verdickung oder Verstärkung 9 auszubilden. Der übrige Einlagenteil, der die Schwallwand bildet, kann in eine Verjüngung 12 übergehen oder durch ein anders geartetes Material gebildet werden. Mit "x" ist die ursprüngliche Einlagenform gekennzeichnet.

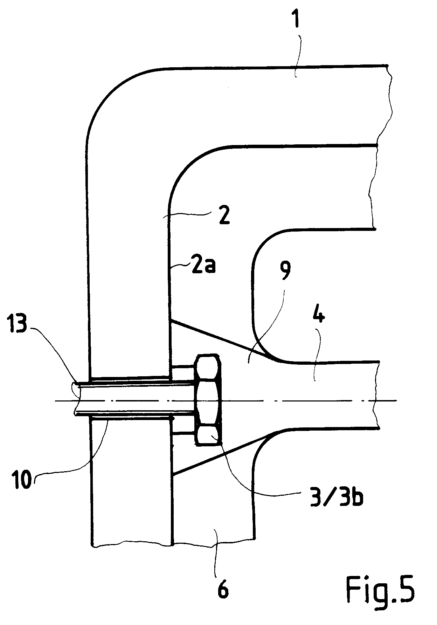

Die Figur 5 zeigt eine alternative zur Ausführungsform gemäß Figur 4, wobei das Fixierelement 3 als eingebette oder eingegossene Mutter 3b vorliegt, in die ein entsprechender von außen eindrehbarer Gewindebolzen 13 eingreift.

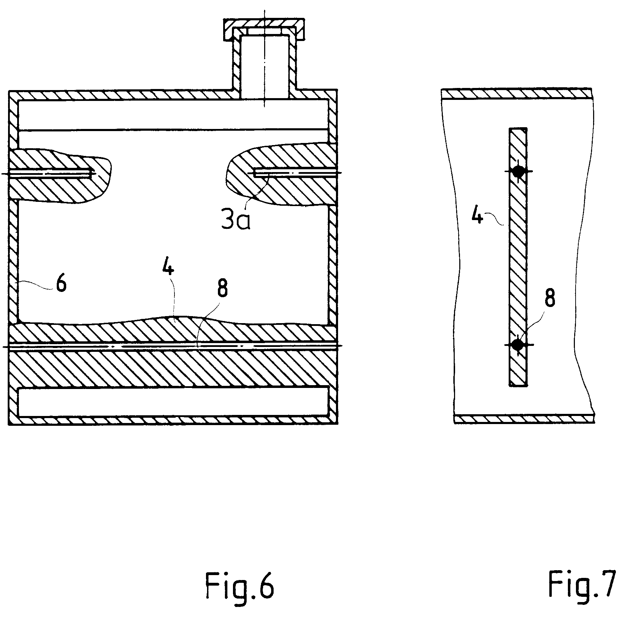

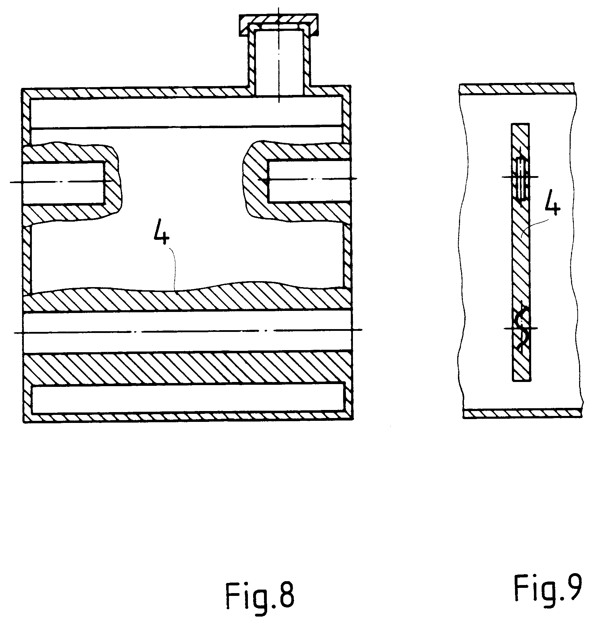

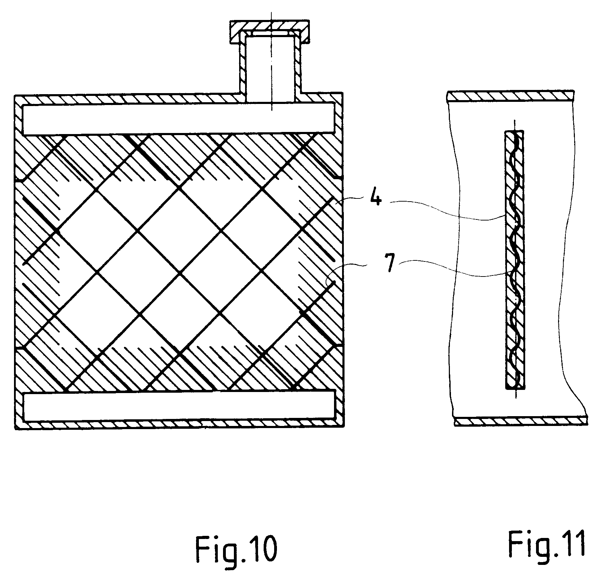

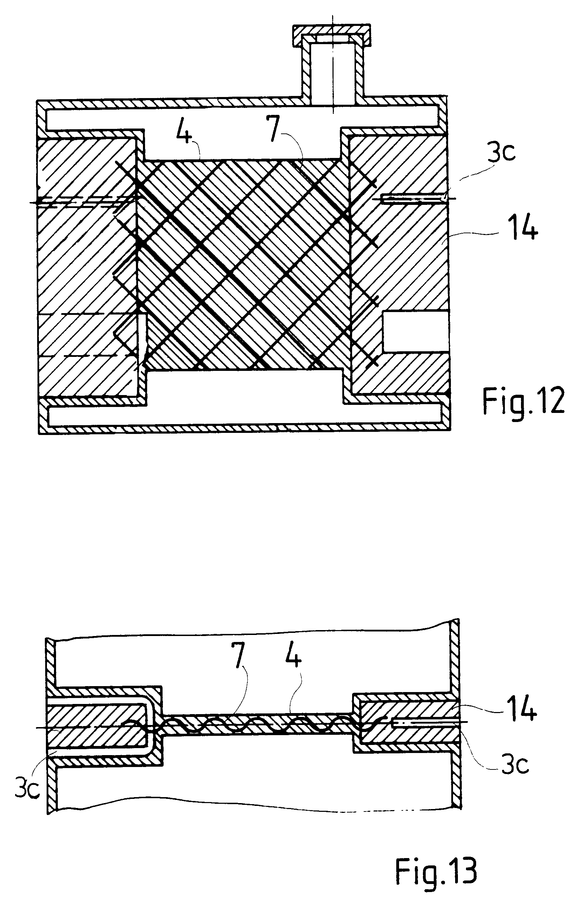

Die Figuren 6 bis 13 zeigen verschiedene Ausführungsvarianten der Erfindung, die alle dem allgemeinen Erfindungsgedanken unterzuordnen sind. Die Figur 6 zeigt hierbei ein Ausführungsbeispiel, bei der die Einlage 4 mit einem Draht 8 bzw. Stifte 3a und bei Figur 10 und 11 bzw. 12 und 13 mit einem Gewebe oder Geflecht 7 durchsetzt ist. Insbesondere bei den Figuren 12 und 13 ist das Geflecht 7 in einem Spannklotz 14 eingelassen, der mittels als Klammern 3c ausgebildeten Fixierelemente integriert wird. Damit wird erreicht, daß die Schwallwand an die Innenwand der Form angepreßt wird.

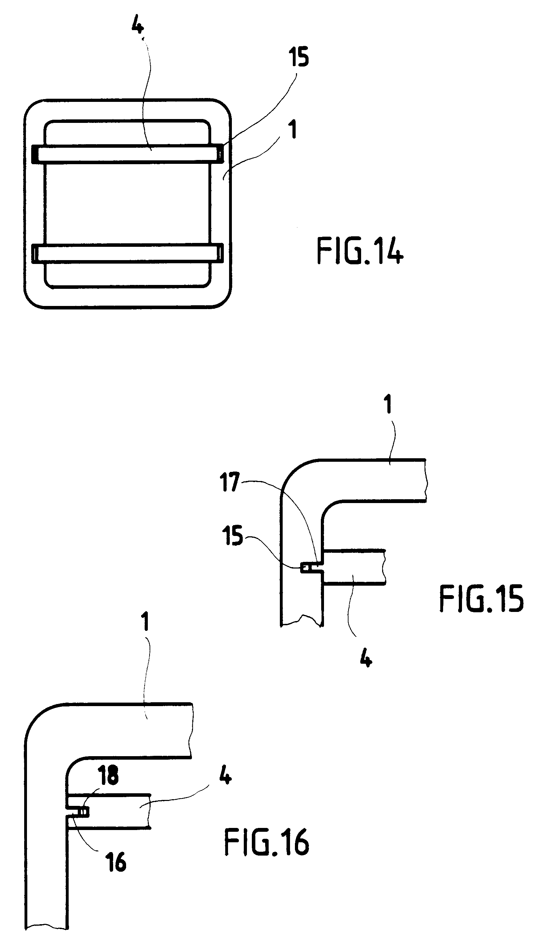

Die Figur 14 zeigt eine einfache Ausführungsform der Anordnung der Einlage 4 innerhalb der Rotationsform 1. Hierbei weißt die Form 1 eine Fuge 15 auf, in der die Einlage 4 zuliegen kommt, oder es ist wie in Figur 15 dargestellt, eine kleindimensionierte Fuge 15 vorgesehen, in die eine an der Einlage 4 angebrachte oder angeformte Feder 17 einragt.
Das Gegenstück zu den Alternativen aus Figur 14 und 15 zeigt die Figur 16, wobei die Form 1 eine nach Innen ragende Feder oder Nase 16 aufweist, die mit einer entsprechenden Fuge oder Nut 18 der Einlage 4 korrespondiert.

Neben den dargestellten Ausführungsformen der Einlagen, kann diese auch als Band 4b oder Blechplatte 4c ausgebildet sein, die in den Zeichnungen nicht dargestellt sind.

Der allgemeine Erfindungsgedanke besteht darin, mittels von außen befestigbaren Fixierlementen eine Einlage innerhalb des Rotationsraumes zu positionieren, die zumindest teilweise mit dem herzustellenden Behälter eine homogene Verbindung eingeht. Die Schwallwand kann hierbei ganz oder teilweise durch starres Material oder auch durch ein endseitig im Behältermaterial eingespanntes Band gebildet werden.

Bezugszeichenliste

| | |
|---|---|
| 1 | Herstellungsform |
| 2 | Wandung der Form |
| 2a | Innenseite der Wandung 2 |
| 3 | Fixierelement |
| 3a | Gewindestift |
| 3b | Mutter |
| 3c | Spange oder Klammer |
| 4 | Einlage |
| 4a | Tafel |
| 4b | Band |
| 4c | Blechplatte |
| 5 | Übergangsstelle |
| 6 | Behälterwand |
| 7 | Geflecht |
| 8 | Draht |
| 9 | Verdickung/Verstärkung |
| 10 | Durchgangsbohrung in 2 |
| 11 | Mutter |
| 12 | Verjüngung |
| 13 | Gewindebolzen |

| 14 | Spannklotz |
|---|---|
| 15 | Fuge |
| 16 | Feder |
| 17 | Feder |
| 18 | Fuge |

**Patentansprüche**

1. Rotierter, geschlossener Kunststoffbehälter mit Schwall- und/oder Trennwänden,
dadurch gekennzeichnet,
daß mindestens eine, vor Verschließen und Rotationsbeginn der Herstellungsform (1), in diese eingesetzte und während der Rotation an den Übergangsstellen (5) mit der Behälterwand (6) zumindest in einem Teilbereich eine homogene Verbindung eingehende Einlage (4) die Schwall- und/oder Trennwand bildet.

2. Kunststoffbehälter nach Anspruch 1,
dadurch gekennzeichnet,
daß die Einlage (4) in die Herstellungsform (1) einpressbar ist.

3. Kunststoffbehälter nach Anspruch 1,
dadurch gekennzeichnet,
daß die Einlage (4) in die Herstellungsform (1) einschieb- oder einsteckbar ist.

4. Kunststoffbehälter nach Anspruch 1 und mindestens einem der vorhergehenden Ansprüche,
dadurch gekennzeichnet,
daß die Herstellungsform (1) zumindest teilweise eine die Einlage (4) aufnehmende Fuge (15) aufweist.

5. Kunststoffbehälter nach Anspruch 1 und mindestens einem der vorhergehenden Ansprüche,
dadurch gekennzeichnet,
daß die Herstellungsform (1) zumindest teilweise eine von der Einlage (4) umgriffene Feder (16) aufweist.

6. Kunststoffbehälter nach Anspruch 1,
dadurch gekennzeichnet,
daß die Einlage (4) in oder an der Herstellungsform fixierbar ist.

7. Kunststoffbehälter nach Anspruch 1 und 7,
dadurch gekennzeichnet,
daß mindestens eine, vor Verschließen und Rotationsbeginn der Herstellungsform (1) in diese eingesetzte und die Wandung (2) der Form (1) mittels Fixierelementen (3) durchragende und verschraub- oder befestigbare, während der Rotation teilweise mit dem Behältermaterial ummantelte und an den Übergangsstellen (5) zur Behälterwand (6) eine homogene Verbindung eingehende Einlage (4) die Schwall- und/oder Trennwand bildet.

8. Kunststoffbehälter nach Anspruch 1 - 7,
dadurch gekennzeichnet,
daß die Einlage als Tafel (4a) ausgebildet ist.

9. Kunststoffbehälter nach Anspruch 1 - 7,
dadurch gekennzeichnet,
daß die Einlage als Band (4b) ausgebildet ist.

10. Kunststoffbehälter nach Anspruch 1 und mindestens einem der vorhergehenden Ansprüche,
dadurch gekennzeichnet,
daß die Einlage (4) ein Geflecht (7) aufweist.

11. Kunststoffbehälter nach Anspruch 1 und mindestens einem der vorhergehenden Ansprüche,
dadurch gekennzeichnet,
daß die Einlage (4) mit Draht (8) durchsetzt ist.

12. Kunststoffbehälter nach Anspruch 1 und mindestens einem der vorhergehenden Ansprüche,
dadurch gekennzeichnet,
daß die Einlage aus einer Blechplatte (4c) gebildet ist.

13. Kunststoffbehälter nach Anspruch 1 und mindestens einem der vorhergehenden Ansprüche,
dadurch gekennzeichnet,
daß die Einlage aus einem Lochblech gebildet ist.

14. Kunststoffbehälter nach Anspruch 1 und mindestens einem der vorhergehenden Ansprüche,
dadurch gekennzeichnet,
daß die Einlage aus einer Folie gebildet ist.

15. Kunststoffbehälter nach Anspruch 1 und mindestens einem der vorhergehenden Ansprüche,
dadurch gekennzeichnet,
daß die Einlage (4) zumindest an den Übergangsstellen (5) aus dem Behälterwerkstoff beschaffen ist.

16. Kunststoffbehälter nach Anspruch 1 und mindestens einem der vorhergehenden Ansprüche,
dadurch gekennzeichnet,
daß die Einlage 4 zumindest an der Übergangsstelle 5 mit dem Behälterwerkstoff ummantelt ist.

17. Kunststoffbehälter nach Anspruch 1 und mindestens einem der vorhergehenden Ansprüche,
dadurch gekennzeichnet,
daß die Einlage (4) im Bereich der Übergangsstellen (5) eine partielle Verdickung oder Verstärkung (9) aufweist.

18. Kunststoffbehälter nach Anspruch 1, 6 bis 17,
dadurch gekennzeichnet,
daß die Fixierelemente (3) als Gewindestifte (3a) ausgebildet sind.

19. Kunststoffbehälter nach Anspruch 1, 6 bis 17,
dadurch gekennzeichnet,
daß die Fixierelemente (3) als eingegossene Muttern (3b) vorliegen.

20. Kunststoffbehälter nach Anspruch 1, 6 bis 17,
dadurch gekennzeichnet,
daß die Fixierelemente (3) als Klammern oder Spangen (3c) ausgebildet sind.

21. Kunststoffbehälter nach Anspruch 1 und mindestens einem der vorhergehenden Ansprüche,
dadurch gekennzeichnet,
daß die Fixierelemente (3) als Spannelemente ausgebildet sind.

22. Kunststoffbehälter nach Anspruch 21,
dadurch gekennzeichnet,
daß die Fixierelemente (3) als durchgehendes, die Form durchragendes Spannelement bzw. Haltelement ausgebildet ist.

23. Kunststoffbehälter nach Anspruch 21 und mindestens einem der vorhergehenden Ansprüche,
dadurch gekennzeichnet,
daß die Fixierelemente (3) jeweils partiell im Bereich der Formwandung angeordnet sind.

Fig.1

Fig.2

Fig.3

Fig.4

Fig.5

3a

6    4    8

**Fig.6**

4

8

**Fig.7**

Fig.8

Fig.9

Fig.10                    Fig.11

Fig.12

Fig.13

FIG.14

FIG.15

FIG.16

| | **EINSCHLÄGIGE DOKUMENTE** | | EP 92101321.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| X | <u>DE - A - 2 551 807</u><br>(SOCIETE NATIONALE INDUSTRIELLE AEROSPATIALE)<br>* Ansprüche 1,2,6-8 * | 1,7 | B 29 C 39/08 |
| A | | 2-4,6, 8-14 | |
| X | <u>WO - A - 81/02 994</u><br>(MASTERNET)<br>* Ansprüche 1-9,13-16 * | 1 | |
| A | | 2-13 | |
| X | <u>US - A - 4 214 670</u><br>(BERGER)<br>* Ansprüche 3,4 * | 1 | |
| A | | 2-23 | |
| A | <u>DE - A - 2 637 683</u><br>(KABEL- UND METALLWERKE GUTEHOFFNUNGSHÜTTE)<br>* Gesamt *<br>---- | | |
| | | | **RECHERCHIERTE SACHGEBIETE (Int. Cl⁵)**<br><br>B 29 C<br>B 29 D |
| | Der vorliegende Recherchenbericht wurde für alle Patentansprüche erstellt. | | |

| Recherchenort | Abschlußdatum der Recherche | Prüfer |
|---|---|---|
| WIEN | 16-06-1992 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82